# EUROPEAN PATENT APPLICATION

(11) **EP 4 075 747 A1**
(43) Date of publication of application: **19.10.2022**
(21) Application number: 21305478.6
(22) Date of filing: 12.04.2021
(51) Int. Cl.: H04L 29/06, H04W 12/02, H04W 12/03, H04W 12/40, G01S 19/37

(54) **A SYSTEM FOR RECEIVING BY A GNB A LOCATION INFORMATION, CORRESPONDING DECIPHERING SERVER AND GNSS CHIPSET**

(71) Applicant: THALES DIS FRANCE SA, 92190 Meudon (FR); THALES, 92400 Courbevoie (FR)
(72) Inventor: FINE, Jean-Yves, 13881 Gémenos Cedex (FR); DANY, Vincent, 13881 Gémenos Cedex (FR); BUI, Camille, 13881 Gémenos Cedex (FR); CHUBERRE, Nicolas, 13881 Gémenos Cedex (FR)
(74) Representative: Scheer, Luc

(57) **Abstract**

The invention concerns a system for receiving by a gNB (14) a location information sent by a GNSS chipset (13) comprised in a mobile equipment (10), the location information being part of a signalling message as part of an initial access procedure, before network dedicated signaling ciphering setup procedure occurs, the GNSS chipset (13) returning to the mobile equipment (10) the location information concealed by a crypto scheme that does not need any diversification from one chipset to another, the concealed location information being de-concealed by a deciphering server (17) at the level of the gNB (14) by a reversed crypto scheme that does not need any diversification from one chipset to another for sending the location information in clear to a dedicated 5G core network (19, 20), the dedicated 5G core network (19, 20) being the one able to handle a communication with the mobile equipment (10).

## Description

The present invention concerns telecommunications and in a particular telecommunications from a satellite to a 5G terrestrial network. More precisely, the invention concerns the connection of a terminal to a 5G network via satellite radio access Non-Terrestrial Network (NTN).

In this network, receivers (or terminals), called GNSS (Global Navigation Satellite System) receivers are present on the earth. A GNSS satellite constellation refers to a constellation of satellites providing signals from space that transmit positioning and timing data to GNSS receivers. The receivers then use this data to determine their location and connect to core networks able to to handle communications with these receivers.

By definition, GNSS provides global coverage. Examples of GNSS include Europe's Galileo, the USA's NAVSTAR Global Positioning System (GPS), Russia's Global'naya Navigatsionnaya Sputnikovaya Sistema (GLONASS) and China's BeiDou Navigation Satellite System.

A communications satellite for GNSS is an artificial satellite that relays and amplifies radio telecommunication signals via a transponder. It creates a communication channel between a source transmitter and a receiver at different locations on earth. Communications satellites are used for television, telephone, radio, internet, and military applications.

It is to be noted that when accessing 5G network through NTN access, because of the cell size that could span over several countries, it is very important for the system to be able to localize the UE (User Equipment - i.e. a satellite receiver that can be in the form of a smartphone for example) in the most reliable possible manner. The localization or position of the UE is in the format latitude/longitude.

During the connection set-up Msg5 entails the position of UE in clear format in order to select the correct core network (gNB) and the associated regulatory service providers in the correct country.

Msg5 signaling information can be found in the standard 3GPP TS 38.331 V16.3.1 from January 2021.

However, transmitting this position in clear generates two risks:
- The position of the UE is sent in clear mode and therefore can be subject to eaves dropping. So, here a privacy infringement can be a problem.
- The data could be manipulated intentionally by the user, so there is a risk that there is a false location of the user.

The present invention's objective is to provide a secured (against privacy infringement) and trustworthy scheme to transport the UE reported location towards the network in order to prevent the mobile network operator's liability associated to a possible (un)intentional manipulation of the UE location which could impact especially regulated services (some services are reserved to given users, depending on their location).

In this respect, the invention proposes a system for receiving by a gNB a location information sent by a GNSS chipset comprised in a mobile equipment, the location information being part of a signalling message as part of an initial access procedure, before network dedicated signaling ciphering setup procedure occurs, the GNSS chipset returning to the mobile equipment the location information concealed by a crypto scheme that does not need any diversification from one chipset to another, the concealed location information being de-concealed by a deciphering server at the level of the gNB by a reversed crypto scheme that does not need any diversification from one chipset to another for sending the location information in clear to a dedicated 5G core network, the dedicated 5G core network being the one able to handle a communication with the mobile equipment.

Preferably, the crypto scheme is an ECIES crypto scheme.

Advantageously, the gNB is a gNB-NTN.

Preferably, the chipset is a telecommunication chipset. In another embodiment it is a secure element.

The invention also concerns a deciphering server at the level of a gNB using by a crypto scheme that does not need any diversification from one chipset to another for sending a concealed location information in clear to a dedicated 5G core network, the concealed location information being concealed by the crypto scheme in a GNSS chipset comprised in a mobile equipment, the dedicated 5G core network being the one able to handle a communication with the mobile equipment.

Finally, the invention concerns a GNSS chipset comprised in a mobile equipment, the GNSS chipset receiving a location information being part of a signalling message as part of an initial access procedure, before network dedicated signaling ciphering setup procedure occurs, the GNSS chipset returning to the mobile equipment the location information concealed by a crypto scheme that does not need any diversification from one chipset to another scheme.

The present invention will be better understood by reading the following description of a preferred embodiment in view of the figures that represent:
- Figure 1 an example of a system according to the invention;
- Figure 2 the concealing of the position of the UE, done in a manner known in the state of the art;
- Figure 3 the de-concealing of the position of the UE, done in a manner known in the state of the art.

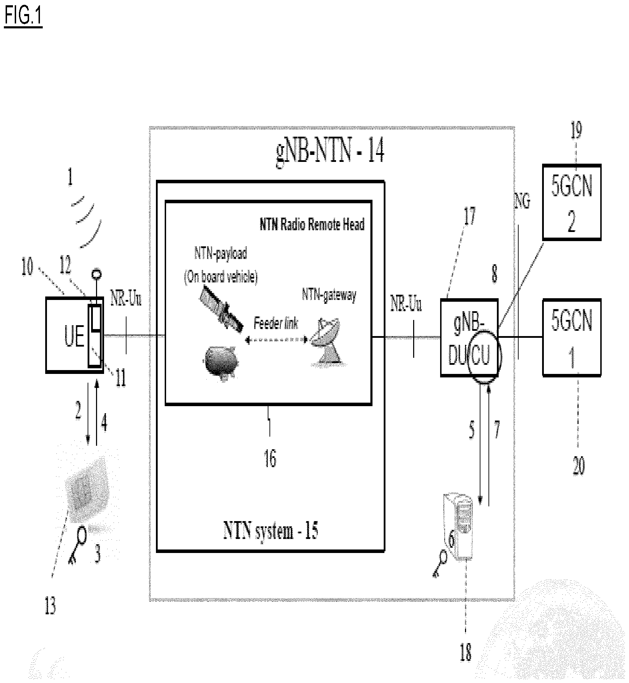

Figure 1 represents an example of a system according to the invention.

In this figure, several elements are represented (in the scope of shared RANs - Radio Network Accesses):
- A User Equipment (UE) 10 comprising a baseband modem 11 comprising a GNSS receiver 12 (for a communication over satellite);
- A chipset 13 cooperating with the UE 10;
- A gNB-NTN 14 (g node B (equivalent to a BTS in 2G, node B in 3G and eNB in 4G systems) for Non-Terrestrial Network). The gNB-NTN can also be a simple gNB (not NTN, i.e. a terrestrial network);
- The gNB-NTN 14 comprises a NTN system essentially ensuring NTN control functions 16 and a gNB-DU/CU 17. The CU is a Central Unit that is a logical node that includes the gNB functions like Transfer of user data, Mobility control, Radio access network sharing, Positioning, Session Management etc., except those functions allocated exclusively to the DU (Distributed Unit). The CU controls the operation of DUs over front-haul (Fs) interface. A CU may also be known as BBU/REC/RCC/C-RAN/V-RAN.

The DU is the logical node that includes a subset of the gNB functions, depending on the functional split option. Its operation is controlled by the CU. The DU is also known with other names like RRH/RRU/RE/RU.
- The gNB-NTN 14 also comprises a deciphering or de-concealing server 18 linked to the gNB-DU/CU 17;
- 5G core networks 19 and 20, named 5GCN2 and 5GCN1 respectively (shared RANs).

This system works as follows (steps are noted 1 to 8):
At step 1, the GNSS receiver 12 of the UE 10 receives its position (latitude and longitude, determined by a satellite or a constellation of satellites).

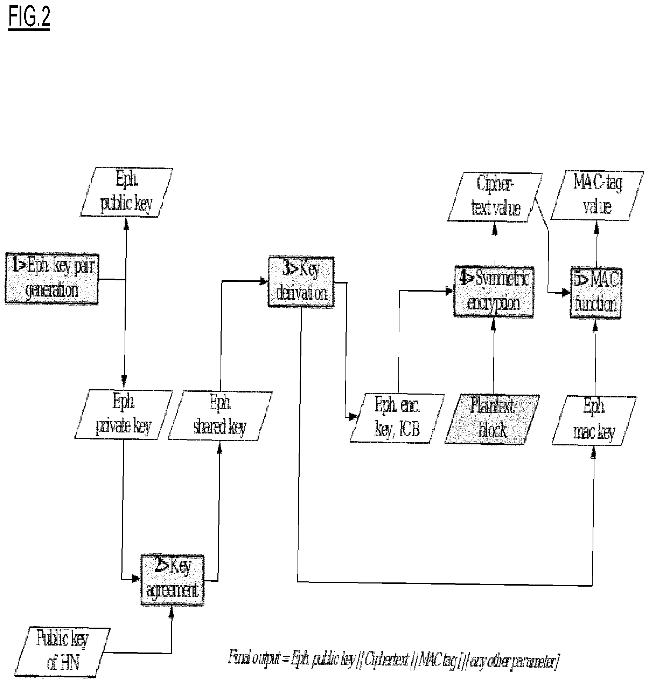

At step 2 the UE 10 sends this position (that is in clear) to the chipset 13 that comprises an Elliptic Curve Integrated Encryption Scheme (ECIES) concealing program to conceal this position information. This concealment is done at step 3 (according to the scheme of figure 2). This location information is part of a signalling message as part of an initial access procedure, before network dedicated signaling ciphering setup procedure occurs (between the UE 10 and a correspondent (third party).

In this embodiment ECIES is used but the ECIES scheme can be replaced by any cryptographic scheme that does not need any diversification for the chipsets.

At step 4, the chipset 13, that can be a telecommunication element like a SIM card, an eUICC (embedded UICC) or an iUICC (integrated UICC), sends back to the UE 10 a concealed position of the UE 10. The chipset can also be a secure element without telecommunication capabilities. When using a telecommunication chipset, the concealment is done in the UICC OS.

The UE 10 sends to the gNB 14 this concealed position. This is done through a NR-Uu interface that connects the UE 10 to the gNB 14 (here a gNB-NTN) over the air. The NR-Uu interface is used as one of several transport links for the LTE Positioning Protocol for a target UE with NR access to NG-RAN. This is done normally in a MSG5 message.

Msg5 is a message corresponding to "RRC - Connection Setup Complete » but this message is only an implementation option. The GNSS can be included in other messages.

For example, during the RRC connection set-up, a message from the UE (e.g. RRC connection setup request, RRC connection setup complete) entails the position of UE in clear format in order to select the correct core network (gNB) and the associated regulatory service providers in the correct country. This is done normally in RRC connection set-up message from the UE. The gNB 14 comprises the NTN control functions 16 that comprise a NTN payload (lodged in a satellite or an aeronef like represented) that receive this concealed position. Thanks to a feeder link (a feeder link is - according to Article 1.115 of the International Telecommunication Union's (ITU) ITU Radio Regulations - defined as a radio link from an earth station at a given location to a space station, or vice versa, conveying information for a space radiocommunication service other than for the fixed-satellite service). The given location may be at a specified fixed point, or at any fixed point within specified areas. The NTN payload transfers the concealed position to a terrestrial antenna (NTN-gateway). The latter transfers this position through a NR-Uu link to the gNB 17.

At this point, the gNB 17 has the concealed information of the position of the UE 10.

In the case that there is no RAN sharing as disclosed in figure 1 (a satellite operator connected to different MNO networks), the deciphering server 18 can also be in a MNO core network. In this case, the operator of the satellite knows the keys and stores them in a so called « card issuer security domain » of the chipset and in the de-concealing platform of the operator with which it works. In this case, there is only one 5GCN.

The gNB 17 then sends to the deciphering server 18 at step 5 the concealed information of the position of the UE 10. At step 6, the deciphering server 18 deciphers the concealed position information and sends it back (step 7) to the gNB 17. The latter can than precisely locate the 5G network that will handle the communication between the UE 10 and its correspondent. More precisely, the CU uses clear position information to route to the appropriate core network (the dedicated 5G core network that is able to handle a communication with the UE 10). It can be here, for example, a communication between the UE 10 and an Orange Core network 20 in France or a Vodafone 19 core network located in Italy (if the satellite coverages France and Italy).

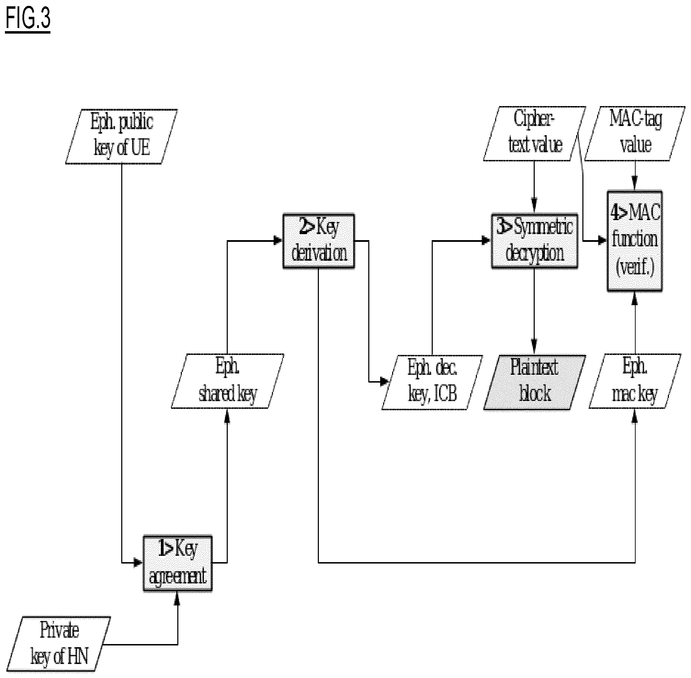

Figure 2 represents the ECIES concealing of the position of the UE and figure 3 represents the ECIES de-concealing of the position of the UE, as can be done according to the state of the art. These figures will not be described as they pertain to the state of the art and they can be found at this address:
https://itectec.com/spec/c-3-elliptic-curve-integrated-encryption-scheme-ecies/

On the UE 10 side, the ECIES scheme shall be implemented such that for computing a fresh concealed positioning information, the UE 10 shall use the provisioned public key of the position de-concealing server 18 and freshly generated ECC (elliptic curve cryptography) ephemeral public/private key pair according to the ECIES parameters provisioned in accordance with the position de-concealing server 18 configuration.

On the gNB 14 side, the ECIES scheme shall be implemented such that for de-concealing the positioning information, the position de-concealing server 18 shall use the received ECC ephemeral public key of the UE and its private key.

The encryption/decryption scheme of the link above is the same as the one used for encoding a SUPI (Subscription Permanent Identifier) in a SUCI (Subscription Concealed Identifier) and realizing the decoding of the SUCI in a SUPI.

The invention also concerns a deciphering server at the level of a gNB using an ECIES crypto scheme for sending a concealed location information in clear to a dedicated 5G core network, the concealed location information being concealed by an ECIES crypto scheme in a GNSS chipset comprised in a mobile equipment, the dedicated 5G core network being the one able to handle a communication with the mobile equipment.

Finally, the invention also concerns a GNSS chipset comprised in a mobile equipment, the GNSS chipset receiving a location information being part of a signalling message as part of an initial access procedure, before network dedicated signaling ciphering setup procedure occurs, the GNSS chipset returning to the mobile equipment the location information concealed by an ECIES crypto scheme.

The main advantages of the invention are:
- Warranty of privacy and security of the transmitted location information
- Simplify deployment by using ECC based system which avoid to provision diversified data on UE side.

The invention is compliant with the standards, at least with 3GPP TS31.102.

## Claims

1. A system for receiving by a gNB (14) a location information sent by a GNSS chipset (13) comprised in a mobile equipment (10), said location information being part of a signalling message as part of an initial access procedure, before network dedicated signaling ciphering setup procedure occurs, said GNSS chipset (13) returning to said mobile equipment (10) said location information concealed by a crypto scheme that does not need any diversification from one chipset to another, said concealed location information being de-concealed by a deciphering server (17) at the level of said gNB (14) by a reversed crypto scheme that does not need any diversification from one chipset to another for sending said location information in clear to a dedicated 5G core network (19, 20), said dedicated 5G core network (19, 20) being the one able to handle a communication with said mobile equipment (10).

2. A system according to claim 1 wherein said crypto scheme is an ECIES crypto scheme.

3. A system according to any of the claims 1 and 2 wherein said gNB is a gNB-NTN (14).

4. A system according to any of the claims 1 to 3 wherein said chipset (13) is a telecommunication chipset.

5. A system according to any of the claims 1 to 3 wherein said chipset (13) is a secure element.

6. A deciphering server (17) at the level of a gNB (14) using by a crypto scheme that does not need any diversification from one chipset to another for sending a concealed location information in clear to a dedicated 5G core network (19, 20), said concealed location information being concealed by said crypto scheme in a GNSS chipset (13) comprised in a mobile equipment (10), said dedicated 5G core network (19, 20) being the one able to handle a communication with said mobile equipment (10).

7. A GNSS chipset (13) comprised in a mobile equipment (10), said GNSS chipset (13) receiving a location information being part of a signalling message as part of an initial access procedure, before network dedicated signaling ciphering setup procedure occurs, said GNSS chipset (13) returning to said mobile equipment (10) said location information concealed by a crypto scheme that does not need any diversification from one chipset to another scheme.
